# EUROPEAN PATENT APPLICATION

(11) **EP 2 822 274 A1**
(43) Date of publication of application: **07.01.2015**
(21) Application number: 12874173.3
(22) Date of filing: 09.10.2012
(51) Int. Cl.: H04N 7/26, H04N 7/30, H04L 29/06

(54) **METHOD FOR CONVERTING ONLINE MEDIA DATA OR PLAYING VIDEO AND APPARATUS THEREOF**

(30) Priority: 10.04.2012 CN 201210103250
(71) Applicant: Huawei Technologies Co., Ltd, Shenzhen, Guangdong 518129 (CN)
(72) Inventor: The designation of the inventor has not yet been filed
(74) Representative: Thun, Clemens
(86) International application number: PCT/CN2012/082645
(87) International publication number: WO 2013/152580

(57) **Abstract**

Embodiments of the present invention provide an online media data conversion method, an online video playing method and a corresponding device. A terminal only needs to parse a segment file and a description file, and the segment file may include a plurality of frames, so the present invention has higher transmission efficiency when compared with the prior art, and is capable of playing by dragging at a current location faster than that in the prior art, thereby providing better experience for a user.

## Description

This application claims priority to Chinese Patent Application No. 201210103250.9, filed with the Chinese Patent Office on April 10, 2012 and entitled "ONLINE MEDIA DATA CONVERSION METHOD, ONLINE VIDEO PLAYING METHOD AND CORRESPONDING DEVICE", which is incorporated herein by reference in its entirety.

### FIELD OF THE INVENTION

The present invention relates to the field of communications technologies, and in particular, to an online media data conversion method, an online video playing method and a corresponding device.

### BACKGROUND OF THE INVENTION

The digital live network alliance (DLNA, Digital Live Network Alliance) is an alliance of main companies in consumer electronics, personal computers and mobile industries. The objective of the alliance is to create an industry standard under which products of all the companies are compatible with each other, so that electronic products in a home can be connected into a network.

In recent years, the smart home is very popular, and more and more home terminal apparatuses emerge into the market, for example, a set top box (STB), a television (TV), a smartphone, a palmtop computer (such as: a PAD), and a HomeNas (HomeNas). Under the concept of the smart home, a plurality of schemes for combining the apparatuses into one home network emerges into the market to satisfy the requirement of the DLNA. The most commonly adopted scheme is that: taking an STB as a center, smart terminals are interconnected under coordination of the STB, various smart apparatuses of a home are combined into a digital media entertainment system. It should be noted that media here include: resources such as audio, video, and pictures. The objective of the digital media entertainment system is that: a user may acquire a media resource, a media service, or an entertainment service on any terminal in the home from any terminal.

However, the smartphone and the palmtop computer have limited decoding capabilities, and cannot play 1080P or 720P high definition video fluently (where P is short for Progressive, indicating progressive scanning). When 1080P high definition video is stored in the HomeNas, and if a user intends to watch the 1080P high definition video through a mobile terminal such as the smartphone or the palmtop computer, the mobile terminal may be stuck and the experience of the user is extremely low.

For a prior art 1, one online scheme for a terminal such as a PAD to play media data acquired from an STB is that: after acquiring an entry of the STB and a conversion capability of the STB for the media data, the PAD sets a transcoding capability of the STB according to the maximum capability of the PAD. The STB converts the media data into the format of a data frame that the PAD is capable of playing fluently, and directly sends a data frame to the PAD for playing. It takes a long time to parse, at the PAD end, a frame header of the data frame sent by the STB, so that much time is consumed when the playing progress of the content played by the PAD end is dragged, and the user experience is low.

For a prior art 2, an offline scheme of enabling a terminal such as a PAD to play media data acquired from an STB is that: after acquiring an entry of the STB and a capability of the STB, the PAD requests a needed media file from the STB according to the maximum capability of the PAD, and then the STB sends the converted media file to the PAD for playing. This method solves the problem that the dragging of the played content consumes time in the prior art 1. However, after synthesizing a video file needed by the PAD after conversion, the STB then sends the video file to the PAD, and the PAD can play the video file only after receiving the converted file, that is, the PAD cannot play and receive the video file simultaneously.

### SUMMARY OF THE INVENTION

Embodiments of the present invention provide an online media data conversion method, an online video playing method and a corresponding device, so as to overcome the problem in the prior art that a terminal consumes time in parsing a data frame header so that the dragging play duration is excessively long.

An embodiment of the present invention provides an online media data conversion method, where the method includes:
responding to a request of a terminal, and obtaining an original data frame by parsing data of a media file;
converting the original data frame into a data frame supported by the terminal, according to three items, namely, an encoding type, a bit rate, and resolution in the request of the terminal;
generating a description file according to the request of the terminal and an attribute of the media file;
synthesizing the data frames supported by the terminal int a segment file according to the generated description file; and
sending the synthesized segment file and the description file to the terminal.

An embodiment of the present invention further provides an online video playing method, where the method includes:
receiving a description file sent by a digital media server;
receiving a segment file sent by the digital media server; and
playing the segment file according to the description file.

An embodiment of the present invention further provides an online media data conversion device, where the device includes: a first parsing unit, a conversion unit, a description file generation unit, a segment synthesis unit, and a first sending unit;
the first parsing unit is configured to respond to a request of a terminal, and obtain an original data frame by parsing data of a media file;
the conversion unit is configured to convert the original data frame into a data frame supported by the terminal, according to three items, namely, an encoding type, a bit rate, and resolution in the request of the terminal;
the description file generation unit is configured to generate a description file according to the request of the terminal and an attribute of the media file; and
the segment synthesis unit is configured to synthesize the data frames supported by the terminal int a segment file according to the generated description file.

An embodiment of the present invention further provides a terminal, where the terminal includes: a first receiving unit, a second receiving unit, and a playing unit;
the first receiving unit is configured to receive a description file sent by a digital media server;
the second receiving unit is configured to receive a segment file sent by the digital media server; and
the playing unit is configured to play the segment file according to the description file.

With the technical solutions provided by the embodiments of the present invention, by converting the original data frame into the data frame supported by the terminal, the description file is generated according to the request of the terminal and the attribute of the media file, the data frame supported by the terminal is synthesized into the segment file according to the generated description file, and the segment file and the description file are sent to the terminal, so that the terminal does not need to parse a frame header of each sent frame data, but only needs to parse the segment file and the description file, and the segment file may include a plurality of frames, so the technical solutions have higher transmission efficiency when compared with the prior art.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from the accompanying drawings without creative efforts.
FIG. 1 is a brief flow chart of an online media data conversion method provided by Embodiment 1 of the present invention;
FIG. 2 is a brief flow chart of an online media data conversion method provided by Embodiment 2 of the present invention;
FIG. 3 is a brief flow chart of an online video playing method provided by Embodiment 3 of the present invention;
FIG. 4 is a brief schematic diagram of an online media data conversion device provided by Embodiment 4 of the present invention; and
FIG. 5 is a brief schematic diagram of a terminal provided by Embodiment 5 of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Embodiments of the present invention provide an online media data conversion method, an online video playing method and a corresponding device. A digital media server may aggregate all media file resources in a home network and establish an entry list. When a terminal requests a media file, the digital media server may convert the media file into a playing format supported by the terminal according the playing format supported by the terminal, synthesizes the converted file into a segment file and send the segment file to the terminal. In this way, while the media file is being watched online fluently, the terminal can play the media file without the need of waiting until all media data is converted into the format supported by the terminal, thereby greatly reducing the duration from the time when a terminal user requests playing of the media file to the time when the media file starts to be played.

At the same time, what the digital media server sends to the terminal is the segment file instead of data in frames, so the duration during which the terminal parses the segment file is less than the duration during which a frame header is parsed every time, so that a user has a faster playing speed when the user drags a progress bar during the playing process, thereby greatly improving user experience.

The technical solutions provided by the embodiments of the present invention are described in detail below with reference to specific embodiments.

### Embodiment 1

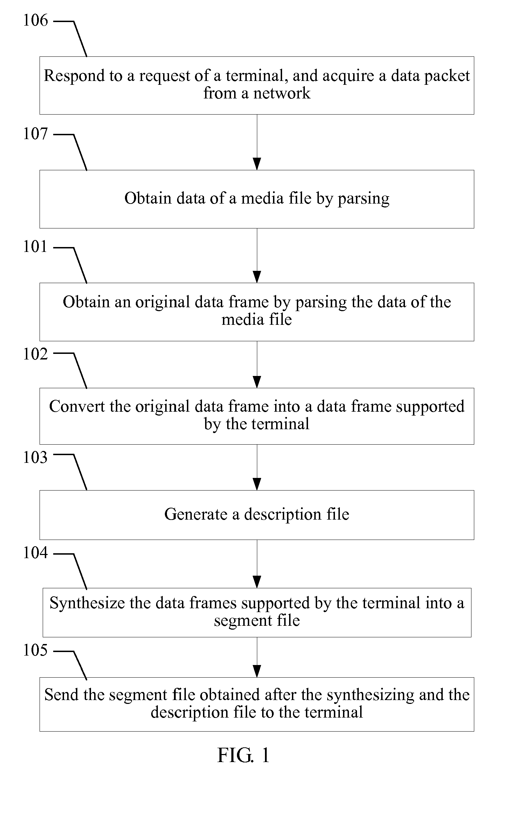

An embodiment of the present invention provides an online media data conversion method, and as shown in FIG. 1, the method includes the following steps.

Step 101: Respond to a request of a terminal, and obtain an original data frame by parsing data of a media file.

The data of the media file mentioned in step 101 may be stored locally, and common formats are 3gp, mp4, avi, asf, wmv, mkv, rmvb, and flv (but are not limited to the formats listed currently), the files are files that are easily parsed and have a certain fault tolerance capability and are obtained by organizing audio/video frame data according to their respective format standard protocols. The data of the media file usually includes: a file information part and a media data frame. The file information part refers to information added for the reason that the file can be easily parsed and can tolerate a fault when parsed. For example, a moov container in an mp4 file includes: a media data type of a file, an encoding format of a media type, video resolution, an audio sampling rate, a video key frame table, an offset location of a video frame and a size of each frame, and offset of an audio data frame and a size of each frame. According to the content of the file information part, the video frame data and the audio frame data needed for playing can be acquired from the file fast and correctly when the file is being played.

The original data frame mentioned in step 101 refers to an encoded video frame and an encoded audio frame. Common video frames include: MPEG1, MPEG4, H264BL, H264MP, H264HP, WMV, RealVideo, and Divx. Common audio frames include AMR, AAC, MPEG3, MPEG2, WMA, and RealAudio. An encoded data frame is smaller in size and stronger in error correction.

The specific operation of "obtain an original data frame by parsing data of a media file" in step 101 may include: first, acquiring file header data from the media file, so as to determine the format of the file; second, according to the known format of the file, obtaining corresponding file information by parsing based on a protocol corresponding to the format of the file, so as to obtain attribute information of the media file, including media types included in the file (including: video, audio, and text), an encoding type, resolution, a bit rate, a sampling rate, the number of sound channels, encoding configuration information needed for decoding that are corresponding to the media types, a key frame table of video frames, the data offset, size and time stamp of each frame of video frames, and the data offset, size and time stamp of an audio frame; and acquiring the corresponding audio/video frame data from the media file according to the acquired attribute information of the media file. When dragging is performed according to a playing need, frame location information is obtained according to the attribute information of the media file obtained by parsing, and the corresponding audio/video frame data is acquired from the file.

For ease of understanding, a process of parsing a mp4 video file (a.mp4) is taken as an example, and specifically includes: first, reading the first 256 bytes of data of the file, finding an ftyp identifier, which indicates that the file is an mp4 file, so as to learn that the file is an mp4 file; second, parsing the following content according to a protocol of the mp4 file; and then, finding a MOOV identifier, acquiring data of a BOX, parsing the BOX, where a sub-BOX is nested under the BOX, such as a TRAK, and acquiring the media type of the mp4 file (including: video, audio, and text), the key frame table of video frames, the data offset and size of each frame of video frames, and the data offset and size of an audio frame; searching for an mfra identifier, and finding the key frame table, where the table records the mp4 key frame location of the file, and the table may be directly searched when a playing progress is dragged, starting playing from a nearby key frame, where if an mdat identifier is found, the BOX is a true starting location of audio media data; and finally, according to the progress requirement (time) of the playing, performing mapping from an acquired frame time stamp and location, and directly extracting a media data frame from the location of the frame in the file.

Step 102: Convert the original data frame into a data frame supported by the terminal, according to three items, namely, an encoding type, a bit rate, and resolution requested in the request of the terminal.

If any one of the three items, namely, the encoding type, the bit rate, and the resolution requested in the request of the terminal is inconsistent with the original data frame in a DMS, conversion needs to be started in the DMS. For example: the original file provided by the DMS is an H264BL, 8Mbps, 30fps, and 1080P file. The terminal (which may specifically be assumed as a PAD) supports H264BL, 1Mbps, 30fps, and 480P (800x480), the PAD end may send a request of the parameter of H264BL, 1Mbps, 30fps, and 480P (800x480), and the DMS needs to start a conversion operation when receiving the request. Alternatively, for example, the PAD end supports MPEG4SP, 1Mbps, 30fps, and 480P (800x480), the PAD end may send a request of the parameter of MPEG4SP, 1Mbps, 30fps, and 480P (800x480), and the DMS needs to start a conversion module when receiving the request. Other conditions may be easily obtained from the foregoing examples.

The operation of converting the original data frame into the data frame supported by the terminal in step 102 may specifically include: The original data frame may be decoded into YUV or RGB data first, then whether scale (scale) processing is performed is determined according to the resolution of the request, (the scale processing is not performed if the resolution is the same), and encoding is performed according to attributes, namely, the encoding type and the bit rate. It should be understood that, the current specific description about the operation of converting the original data frame into the data frame supported by the terminal is not a limit to the embodiment of the present invention, and the present invention is not limited to the specific conversion method in the current example.

Step 103: Generate a description file according to the request of the terminal and the attribute of the media file.

The description file may include: the total duration of the file acquired from the attribute of the media file; and any one or any combination of a file duration of a segment file, a format of a segment file, encoding information of a segment file, and actual resolution of a segment file acquired from the request of the terminal. It should be understood that, specific content in the description file may be different according to actual design needs, and is an example for ease of understanding herein rather than a limit to the embodiment of the present invention.

The attributes of the file converted into the data frame supported by the terminal may specifically include: an encoding type, a bit rate, resolution, and a file format.

Step 104: Synthesize the data frames supported by the terminal into a segment file according to the generated description file.

The segment file is a small segment of the original file, which may be divided by time. If the original file has 3600s, and each segment file has 3s, the original file is divided into 1200 small segment files. According to an organization format requested by the terminal, data frames of every 3s (3s data including all the media types of the original file) plus file information data needed by the file format are organized into a file. In this way, online conversion playing is implemented, where a time delay is time needed for generating a 3s segment file by conversion. If the original file is not divided into segment files, the time delay is time needed for synthesizing the 3600s file by conversion, and therefore, the time delay is reduced greatly. The scheme for synthesizing segment files may not be merely limited to the currently described scheme.

The segment file may include a segment file header part and a data part. The data part is the data frame supported by the terminal; and the segment file header part includes segment attribute information.

It should also be noted that, segment files are not limited to be divided by time, and may also be divided by data amount. A corresponding description file is designed according to the description of data amount specifically.

Step 105: Send the synthesized segment file and the description file to the terminal.

The segment file may be sent to the terminal by using a hypertext transfer protocol (Http, The Hypertext Transfer Protocol), a real time streaming protocol (RTSP, Real Time Streaming Protocol), a real-time transport protocol (RTP, Real-Time Transport Protocol) and other protocols specifically, but the present invention is not limited to the sending method exemplified currently.

With the description of the online media data conversion method provided by Embodiment 1 of the present invention, in the method, the original data frame is converted into the data frame supported by the terminal, the description file is generated according to the request of the terminal and the attribute of the media file, the data frame supported by the terminal is synthesized into the segment file according to the generated description file, and the segment file and the description file are sent to the terminal, so that the terminal side does not need to parse a frame header of each sent frame data, but only needs to parse the segment file and the description file, and the segment file may include a plurality of frames, so the method has higher transmission efficiency when compared with the prior art. Therefore, when the playing progress is dragged, the terminal is capable of quickly acquiring converted data online, so playing can be performed after dragging at the current location faster than that in the prior art, thereby providing better experience for a user.

Besides, in the prior art, after a PAD end is set with the capability of the STB, when the capability needed by another PAD exceeds the maximum range set for the previous PAD, the STB is incapable of supporting a plurality of PADs, and is only capable of supporting one PAD at the same time. The scheme provided by the embodiment of the present invention is to request the STB to provide corresponding audio/video sources according to the requirement of the terminal, the capability of the STB is not limited, and the STB can provide corresponding audio/video sources according to requests of a plurality of PADs.

Further, if the data of the media file requested by the terminal is not stored locally, but needs to be transmitted from other terminals through a network, the method, before step 101, further includes the following steps.

Step 106: Respond to the request of the terminal, and acquire a data packet from the network.

Step 106 may be understood as: the data of the media file requested by the terminal is not stored locally, and may be obtained through network transmission, and may specifically be acquired through the Internet Protocol (IP, Internet Protocol), or, may be acquired through a digital video broadcasting (DVB, Digital Video Broadcasting) network, but the present invention is not limited to the network exemplified currently.

Step 107: Obtain the data of the media file by parsing according to a network protocol and the acquired data packet; and then execute operations of steps 101 to 105.

It should be understood that, network transmission needs a protocol of the transmission. A sending end sends a data packet according to a packing requirement of the protocol, and according to an unpacking requirement corresponding to the protocol, a receiving end needs to unpack the data packet to obtain the data before packing. For example, an HTTP transmits a 3gp media file. The packet header needed by the HTTP is added in the front of 3gp media data during transmission, and in the same way, the packet header of the HTTP needs to be removed after the receiving end receives the data, so as to obtain the data of the media file. The process may be understood as: obtaining the data of the media file by parsing according to the network protocol and the acquired data packet.

By adding steps 106 and 107, a device may acquire, through the network, the data of the media file not stored locally, so as to provide more media resource selection for a user.

### Embodiment 2

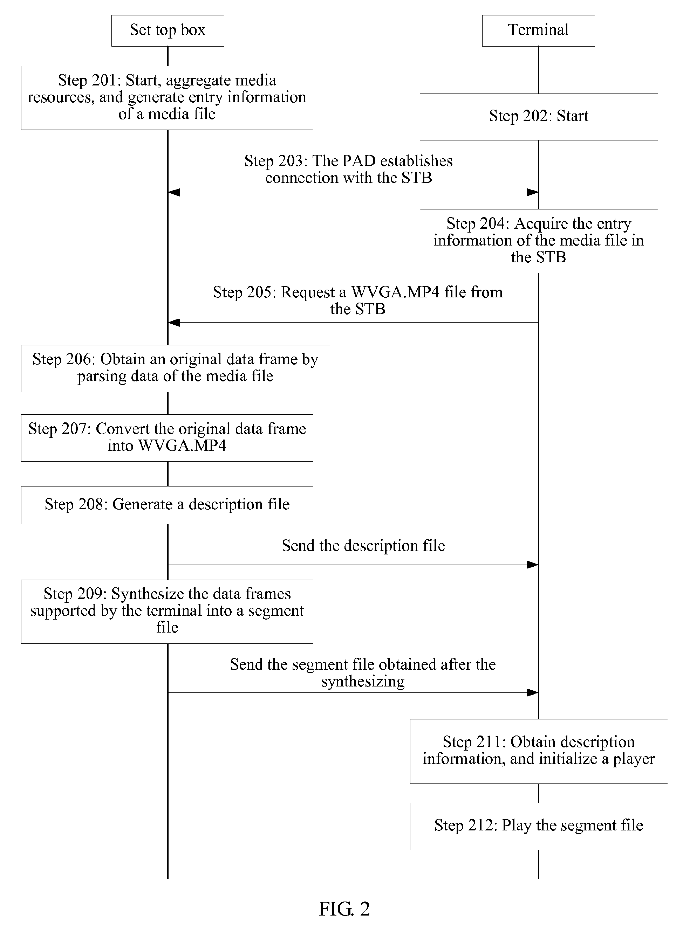

An embodiment of the present invention provides an online media data conversion method, where the method is similar to the method provided in Embodiment 1. The two methods are based on the same design idea, and the difference lies in that, Embodiment 2 provides a more specific and detailed implementation process example based on the method in Embodiment 1. As shown in FIG. 2, by taking that a device executing the method is a set top box (STB, Set Top Box) (which may specifically be a digital media service (DMS, Digital Media Service) module in the STB), and an execution terminal is a PAD (which may specifically be a digital media control (DMC, Digital Media Control) module, or a digital media rendering (DMR, Digital Media Rendering) module, or a digital media player (DMP, Digital Media Player) module in the PAD) as an example, the method includes the following steps.

Step 201: Start a set top box, aggregate media resources, and generate entry information of a media file.

For ease of understanding the embodiment of the present invention, an example may be made that the entry information of the media file generated by the current set top box includes all media formats supported by the STB, and the STB may support: resolution being 1080p, and a media format being MP4; or the resolution being 720p, and the media format being MP4; the resolution being WVGA, and the media format being MP4; or the resolution being D1, and the media format being MP4; or the resolution being CIF, and the media format being MP4; or the like.

Step 202: Start a terminal, where the terminal may specifically be a PAD.

Step 203: The PAD establishes connection with the STB.

Step 204: The PAD acquires the entry information of the media file in the STB according to the established connection.

Step 205: The PAD requests a WVGA.MP4 file from the STB according to a user requirement.

Step 206: The STB responds to the request of the terminal, and obtains an original data frame by parsing data of the media file.

Step 207: The STB converts the original data frame into a data frame supported by the terminal, that is, into WVGA.MP4, according to three items, namely, an encoding type, a bit rate, and resolution requested in the request of the terminal.

Step 208: The STB generates a description file according to the request, and sends the description file to the PAD.

The generated description file in the STB describes attributes of a file obtained after media content is converted, and the attributes of the file may specifically include: the total duration of the file, information of segment files, a duration of each segment file, a file format, encoding information, and actual resolution. The format of the description file may be an extensible markup language (XML, Extensible Markup Language) file. For ease of understanding, codes of description information are exemplified below, including:

```
          < ?xml version="1.0" encoding="utf-8" ?>
          <root>
            <FileTotalDuration>180000</FileTotalDuration> // total file duration (ms)
            <FileSeek>Yes</FileSeek>// whether to support dragging
            <SegFile>
            <SegFileDuration> 10000</ SegFileDuration > // segment file duration (ms)
            <SegFileFormat> mp4</ SegFileFormat > // segment file format
            <SegFileVideoFormat>MPEG4</SegFileVideoFormat > // video encoding
            <SegFileVideoResolution>800,480</SegFileVideoResolution > // video resolution
            </SegFile>
          </root>
```

The codes of the description file indicate that, in the description file, the description about a segment file specifically includes that: the version of the description file is version 1.0, the total duration of the file is 180000 ms, the file supports dragging, the duration of the segment file is 10000 ms, the format of the segment file is MP4, the video encoding adopts MPEG4, and the video resolution is 480P (800x480).

Step 209: Synthesize the data frames supported by the terminal into a segment file according to the generated description file.

Step 210: Send the synthesized segment file to the terminal.

Step 211: After receiving the segment file, the PAD parses it to obtain the description information, and initializes a player.

Step 212: The PAD receives a segment file in a WVGA.MP4 format, and plays the segment file.

With the description of the online media data conversion method provided by Embodiment 2 of the present invention, in the method, the STB converts the original data frame into the data frame supported by the terminal, generates the description file according to the request of the terminal and the attribute of the media file, synthesizes the data frames supported by the terminal int the segment file according to the generated description file, and sends the segment file and the description file to the terminal, so that the terminal side does not need to parse a frame header of each sent frame data, but only needs to parse the segment file and the description file, and the segment file may include a plurality of frames, so the method has higher transmission efficiency when compared with the prior art. Therefore, when a playing progress is dragged, the terminal is capable of quickly acquiring the converted data online, so playing can be performed after dragging at the current location faster than that in the prior art, thereby providing better experience for a user.

### Embodiment 3

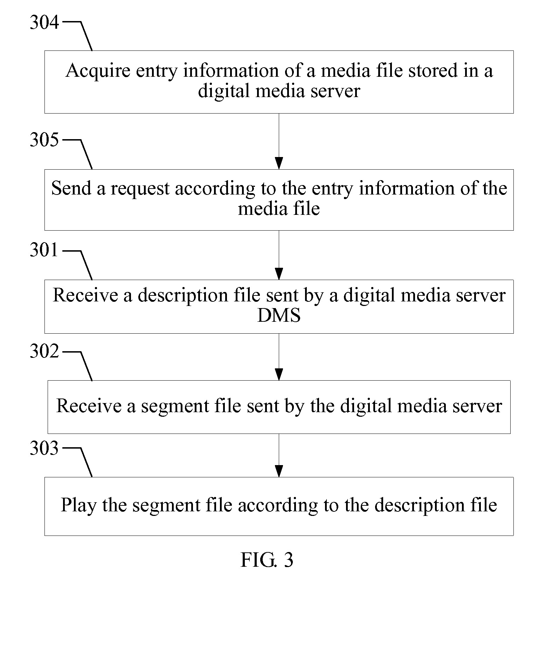

An embodiment of the present invention further provides an online video playing method, and as shown in FIG. 3, the method includes the following steps.

Step 301: Receive a description file sent by a digital media server DMS.

The description file may include: any one or any combination of the total duration of the file, a file duration of a segment file, a format of a segment file, encoding information of a segment file, and actual resolution of a segment file. Reference may be made to description about the description file in Embodiment 1 and Embodiment 2 for more description about the description file, and details are not described again herein.

Step 302: Receive a segment file sent by a digital media server.

Step 303: Play the segment file according to the description file.

A location where a user needs to play may be found in a terminal according to the description file, and a segment file corresponding to the location is played, which is different from the prior art in which each frame needs to be parsed to play so as to result in low online play efficiency.

In the online video playing method provided in Embodiment 3 of the present invention, the description file and the segment file sent by the DMS may be received, the segment file is played according to the description file, and the location where a user needs to play may be found in the terminal according to the description file, and the segment file corresponding to the location is played, which is different from the prior art in which each frame needs to be parsed to play so as to result in low online play efficiency.

Further, before step 301, the method further includes the following steps.

Step 304: Acquire entry information of the media file stored in the digital media server.

Step 305: Send a request according to the entry information of the media file, where the request at least includes the attribute of the file supported by the terminal.

By adding steps 304 and 305, the terminal side may learn the entry information of the media file in the DMS, that is, may acquire the capability of the DMS, so that the DMS is capable of serving the terminal successfully.

### Embodiment 4

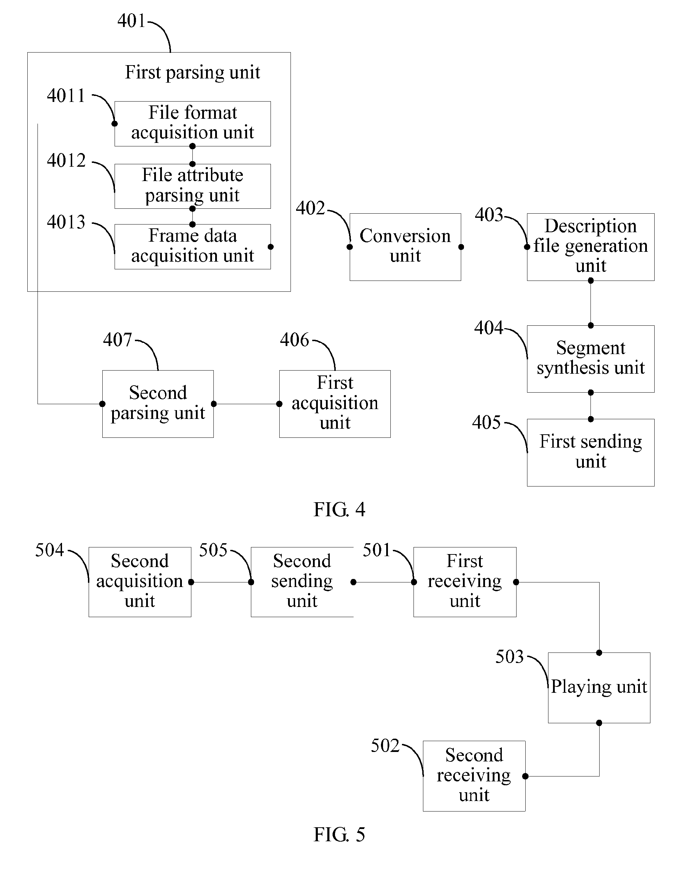

An embodiment of the present invention further provides an online media data conversion device, and as shown in FIG. 4, the device includes: a first parsing unit 401, a conversion unit 402, a description file generation unit 403, a segment synthesis unit 404, and a first sending unit 405.

The first parsing unit 401 is configured to respond to a request of a terminal, and obtain an original data frame by parsing data of a media file.

The conversion unit 402 is configured to convert the original data frame into a data frame supported by the terminal, according to three items, namely, an encoding type, a bit rate, and resolution in the request of the terminal.

The description file generation unit 403 is configured to generate a description file according to the request of the terminal and an attribute of the media file.

The description file at least includes: any one or any combination of the total duration of the file, a file duration of a segment file, a format of a segment file, encoding information of a segment file, and actual resolution of a segment file.

The segment synthesis unit 404 is configured to synthesize the data frames supported by the terminal int a segment file according to the generated description file.

The first sending unit 405 is configured to send the synthesized segment file and the description file to the terminal.

With the description of the online media data conversion device provided by Embodiment 4 of the present invention, the device converts the original data frame into the data frame supported by the terminal, generates the description file according to the request of the terminal and the attribute of the media file, synthesizes the data frames supported by the terminal int the segment file according to the generated description file, and sends the segment file and the description file to the terminal, so that the terminal side does not need to parse a frame header of each sent frame data, but only needs to parse the segment file and the description file, and the segment file may include a plurality of frames, so the device has higher transmission efficiency when compared with the prior art. Therefore, when a playing progress is dragged, the terminal is capable of quickly acquiring the converted data online, so playing can be performed after dragging at the current location faster than that in the prior art, thereby providing better experience for a user.

Further, the first parsing unit 401 in the device specifically includes: a file format acquisition unit 4011, a file attribute parsing unit 4012, and a frame data acquisition unit 4013.

The file format acquisition unit 4011 is configured to acquire file header data from the media file, and determine a file format.

The file attribute parsing unit 4012 is configured to obtain file information by parsing according to the determined file format, and a protocol corresponding to the file format, so as to obtain attribute information of the media file.

The frame data acquisition unit 4013 is configured to acquire, according to the obtained attribute information of the media file, corresponding audio/video frame data from the media file.

Further, the segment synthesis unit 404 in the device is specifically configured to divide, according to the generated description file, the data frames supported by the terminal by set time.

Further, the device further includes: a first acquisition unit 406, and a second parsing unit 407.

The first acquisition unit 406 is configured to respond to the request of the terminal, and acquire a data packet from a network.

The second parsing unit 407 is configured to obtain data of the media file by parsing according to a network protocol and the acquired data packet.

By adding the first acquisition unit 406, and the second parsing unit 407, the device may acquire, through the network, the data of the media file not stored locally, so as to provide more media resource selection for a user.

It should also be noted that, reference may be made to description of methods in Embodiment 1 and Embodiment 2 for detailed description of Embodiment 4, and details are not described again in this embodiment.

### Embodiment 5

An embodiment of the present invention provides a terminal, and as shown in FIG. 5, the terminal includes: a first receiving unit 501, a second receiving unit 502, and a playing unit 503.

The first receiving unit 501 is configured to receive a description file sent by a digital media server.

The second receiving unit 502 is configured to receive a segment file sent by the digital media server.

The playing unit 503 is configured to play the segment file according to the description file.

The terminal provided in Embodiment 5 of the present invention may receive the description file and the segment file sent by the DMS, and play the segment file according to the description file. A location where a user needs to play may be found in the terminal according to the description file, and the segment file corresponding to the location is played, which is different from the prior art in which each frame needs to be parsed to play so as to result in low online play efficiency.

Further, the terminal further includes: a second acquisition unit 504, and a second sending unit 505.

The second acquisition unit is configured to acquire entry information of a media file stored in the digital media server.

The second sending unit is configured to send a request according to the entry information of the media file, where the request at least includes an attribute of a file supported by the terminal.

By adding the second acquisition unit and the second sending unit, the terminal side may learn the entry information of the media file in the DMS, that is, may acquire the capability of the DMS, so that the DMS is capable of serving the terminal successfully.

A person of ordinary skill in the art may understand that all or a part of the steps of the method in the embodiments may be implemented by a program instructing relevant hardware. The program may be stored in a computer readable storage medium. The storage medium may be a read-only memory, a magnetic disk, or an optical disk.

An online media data conversion method, an online video playing method and a corresponding device that are provided in the present invention are described in detail above. A person of ordinary skill in the art may make modifications in terms of the specific implementation and application scopes according to the idea of the embodiments of the present invention. In conclusion, the content of the specification shall not be construed as a limit to the present invention.

## Claims

1. An online media data conversion method, comprising:
responding to a request of a terminal, and obtaining an original data frame by parsing data of a media file;
converting the original data frame into a data frame supported by the terminal, according to three items, namely, an encoding type, a bit rate, and resolution in the request of the terminal;
generating a description file according to the request of the terminal and an attribute of the media file;
synthesizing the data frames supported by the terminal into a segment file according to the generated description file; and
sending the synthesized segment file and the description file to the terminal.

2. The method according to claim 1, wherein the obtaining the original data frame by parsing the data of the media file comprises:
acquiring file header data from the media file, and determining a file format;
obtaining file information by parsing according to the determined file format, and a protocol corresponding to the file format, to obtain attribute information of the media file; and
obtaining corresponding audio/video frame data from the media file according to the obtained attribute information of the media file.

3. The method according to claim 1, wherein the synthesizing the data frames supported by the terminal int the segment file according to the generated description file comprises:
dividing, according to the generated description file, the data frames supported by the terminal by set time.

4. The method according to claim 1, wherein before the obtaining the original data frame by parsing the data of the media file, the method further comprises:
acquiring a data packet from a network according to the request of the terminal; and
obtaining the data of the media file by parsing according to a network protocol and the acquired data packet.

5. The method according to claim 1, wherein, the description file at least comprises: any one or any combination of a total duration of the file, file duration of a segment file, a format of a segment file, encoding information of a segment file, and actual resolution of a segment file.

6. An online video playing method, comprising:
receiving a description file sent by a digital media server;
receiving a segment file sent by the digital media server; and
playing the segment file according to the description file.

7. The method according to claim 6, wherein before the receiving the description file sent by the digital media server, the method further comprises:
acquiring entry information of a media file stored in the digital media server; and
sending a request according to the entry information of the media file, wherein the request at least comprises an attribute of a file supported by a terminal.

8. An online media data conversion device, comprising: a first parsing unit, a conversion unit, a description file generation unit, a segment synthesis unit, and a first sending unit, wherein
the first parsing unit is configured to respond to a request of a terminal, and obtain an original data frame by parsing data of a media file;
the conversion unit is configured to convert the original data frame into a data frame supported by the terminal, according to three items, namely, an encoding type, a bit rate, and resolution in the request of the terminal;
the description file generation unit is configured to generate a description file according to the request of the terminal and an attribute of the media file;
the segment synthesis unit is configured to synthesize the data frames supported by the terminal into a segment file according to the generated description file; and
the first sending unit is configured to send the synthesized segment file and the description file to the terminal.

9. The device according to claim 8, wherein the first parsing unit specifically comprises: a file format acquisition unit, a file attribute parsing unit, and a frame data acquisition unit;
the file format acquisition unit is configured to acquire file header data from the media file, and determine a file format;
the file attribute parsing unit is configured to obtain file information by parsing according to the determined file format and a protocol corresponding to the file format, to obtain attribute information of the media file; and
the frame data acquisition unit is configured to acquire, according to the obtained attribute information of the media file, corresponding audio/video frame data from the media file.

10. The device according to claim 8, wherein the segment synthesis unit is specifically configured to divide, according to the generated description file, the data frames supported by the terminal by set time.

11. The device according to claim 8, further comprising: a first acquisition unit, and a second parsing unit;
the first acquisition unit is configured to, according to the request of the terminal, acquire a data packet from a network; and
the second parsing unit is configured to obtain the data of the media file by parsing according to a network protocol and the acquired data packet.

12. The device according to claim 8, wherein the description file at least comprises: any one or any combination of a total duration of the file, a file duration of a segment file, a format of a segment file, encoding information of a segment file, and actual resolution of a segment file.

13. A terminal, comprising: a first receiving unit, a second receiving unit, and a playing unit, wherein
the first receiving unit is configured to receive a description file sent by a digital media server; the second receiving unit is configured to receive a segment file sent by the digital media server; and
the playing unit is configured to play the segment file according to the description file.

14. The terminal according to claim 13, further comprising:
a second acquisition unit, configured to acquire entry information of a media file stored in the digital media server; and
a second sending unit, configured to send a request according to the entry information of the media file, wherein the request at least comprises an attribute of a file supported by the terminal.
